Europäisches Patentamt

European Patent Office

Office européen des brevets

(19)

(11) Publication number: **0 118 264**
**B1**

# EUROPEAN PATENT SPECIFICATION

(45) Date of publication of patent specification: **31.08.88**

(21) Application number: **84301232.9**

(22) Date of filing: **23.02.84**

(51) Int. Cl.⁴: **A 21 C 3/02,** A 21 C 3/04,
A 21 C 9/00, A 21 D 13/08

(54) Method for continuously manufacturing a multi-layered dough material.

(30) Priority: **23.02.83 JP 27751/83**

(43) Date of publication of application:
**12.09.84 Bulletin 84/37**

(45) Publication of the grant of the patent:
**31.08.88 Bulletin 88/35**

(84) Designated Contracting States:
**AT BE CH DE FR GB IT LI LU NL SE**

(56) References cited:
**FR-A-2 422 336**
**US-A-4 266 920**
**US-A-4 322 202**

(73) Proprietor: **RHEON AUTOMATIC MACHINERY
CO. LTD.
2-3, Nozawa-machi
Utsunomiya-shi Tochigi-ken (JP)**

(72) Inventor: **Yoshioka, Mitsuharu
2503, Ohaza Tamichigari
Kanzaki-gun Saga-Ken (JP)**

(74) Representative: **Leale, Robin George et al
FRANK B. DEHN & CO. Imperial House 15-19
Kingsway
London WC2B 6UZ (GB)**

Courier Press, Leamington Spa, England.

## Description

The present invention relates to a method of continuously manufacturing a multi-layered dough material consisting of layers of flour dough and plastic fat, for instance margarine, butter, shortening or the like, overlying each other alternately, which material is used in the manufacture of raw pies for example.

In the past such a material has been produced by first forming a mass in which plastic fat is covered with flour dough, then stretching the mass into a three-layered strip, folding the strip, and repeating such stretching and folding operations alternately to produce a plurality of layers one above the other.

Another known method, partly exemplified in French Patent Specification No. 2422336, employs dough material in which pieces of plastic fat are dispersed in flour dough and the dough material is then passed between a pair of opposed rollers under pressure to obtain a sheet of dough. The dough sheet is folded into a stack composed of a series of layers thereof, and the stack is then passed between a further pair of opposed rollers under pressure to stretch it and thus to produce a multi-layered dough sheet consisting of layers of flour dough and fat overlying each other alternately.

In the latter method however, when the dough material with the pieces of plastic fat dispersed therein is passed between the opposed rollers under pressure to be stretched, regions of the dough material adjacent to the rollers are subjected to unnecessarily high pressures, so that the stream of the dough material is considerably disturbed. This results in the production of a dough material in which the pieces of plastic fat do not maintain their dispersed state as individual masses, but rather are integrally mixed with the flour dough. Therefore, when the stretched dough material is folded, individual layers of fat are present, and as a result the dough material does not rise sufficiently when baked, thereby failing to provide pies (for example) of good quality. The problem can be alleviated somewhat by using a plurality of said pairs of opposed rollers arranged in series so as to reduce the integration of the fat pieces into the dough, but then the whole structure of the apparatus becomes much larger, making the process uneconomical.

United States Patent Specification No. 4266920 discloses a method of continuously making a dough strip having many layers, with flour dough layers alternating with layers of fat, including the step of passing material through a screw-type extruder comprising a cylindrical housing with a screw housed therein. However, only the flour dough is fed by way of the screw-type extruder, the fat being combined with it downstream of the extruder to form a dough having a single layer of fat enclosed in an outer layer of flour dough, which is then stretched and folded. This method has disadvantages similar to those mentioned above.

It is the object of the present invention to provide a method for forming the dough material into multiple layers of flour dough and fat, alternating with each other, before it is stretched and folded, thereby alleviating the above problems.

Thus according to the invention there is provided a method of continuously making a dough strip having many layers, with flour dough layers alternating with layers of fat, including the step of passing the flour dough through a screw-type extruder comprising a cylindrical housing with a screw housed therein, characterised in that the flour dough which is passed through the said screw-type extruder has many pieces of fat dispersed therein, whereby a substantially concentrically or spirally layered dough strip is produced.

The said screw-type extruder preferably comprises a cylinder housing more than one screw, said housing being provided at its downstream end with a reduced nozzle.

An embodiment of the invention will now be described by way of example with reference to the accompanying drawings, in which:

Figure 1 is a schematic side view of a conventional apparatus for continuously manufacturing a multilayered dough material;

Figure 2 is a plan view of an apparatus for carrying out a method according to the present invention;

Figure 3 is a side view of the apparatus shown in Figure 2;

Figure 4 is an enlarged view of the dough stretching device of the apparatus shown in Figure 3;

Figure 5 is a schematic side view of a screw-type extruder of the apparatus;

Figure 6 is a cross-sectional diagrammatic view of dough material when in a cylinder constituting a part of the extruder; and

Figure 7 is a cross-sectional diagrammatic view of douch material after being discharged from a nozzle of the cylinder.

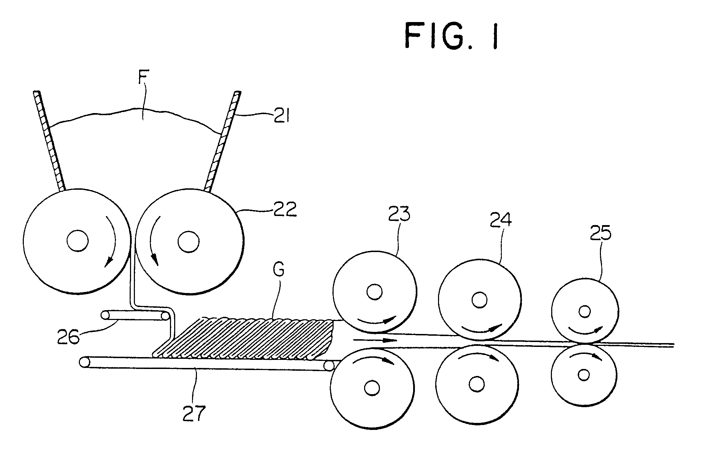

Figure 1 of the drawings shows a conventional apparatus for continuously manufacturing multilayered dough material. Dough material F is prepared by mixing flour with a plurality of die-sized pieces of plastic fat, for example margarine, butter or shortening, in the amount of more than 50% by weight of the flour, and slightly kneading the mixture with salt water in the amount of 40% by weight of the flour to the extent that the pieces of fat are not substantially crushed. The dough material F is fed into a hopper 21, from where it is passed under pressure through a gap formed between a air of opposed rollers 22 which are rotated in opposite directions about their respective shafts, to form a sheet of dough. The dough sheet is received on a first belt conveyor 26 positioned beneath the pair of rollers 22. When it falls from the end of the conveyor 26 the sheet is received on a second belt conveyor 27 positioned beneath the first conveyor 26. The dough sheet falling from the first conveyor 26 is folded on the second conveyor 27, as shown in Figure 1, by moving the first conveyor 26 horizontally back and forth alternately. The folded douch G is then passed under pressure through successively reduced gaps between a plurality of pairs of opposed rollers, in this case three pairs of rollers 23, 24 and 25, which are rotated in opposite directions, respectively, whereby the folded dough G is stretched into a multi-layered dough sheet.

In such conventional apparatus, however, the dough material is subjected to undesirably high pressure at regions thereof adjacent to the pairs of rollers, which results in the production of a dough material in which the pieces of plastic fat, particularly those adjacent the pairs of rollers, are integrally mixed with the flour dough rather than maintaining a dispersed state therein, so that the desired layers of fat are not produced in the folded and stretched dough sheet.

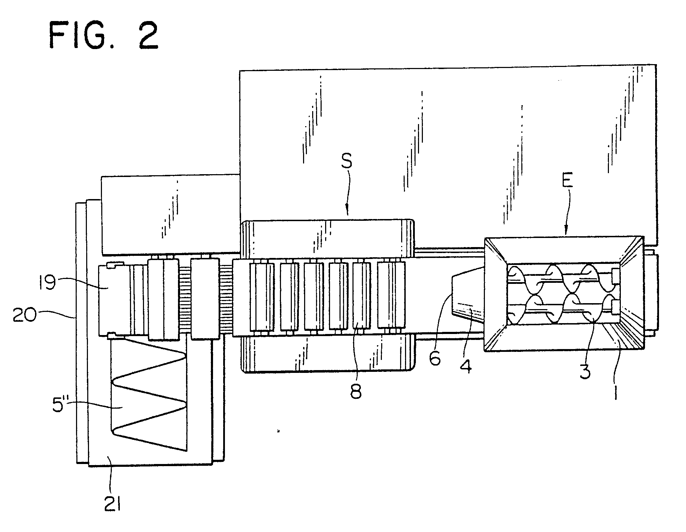

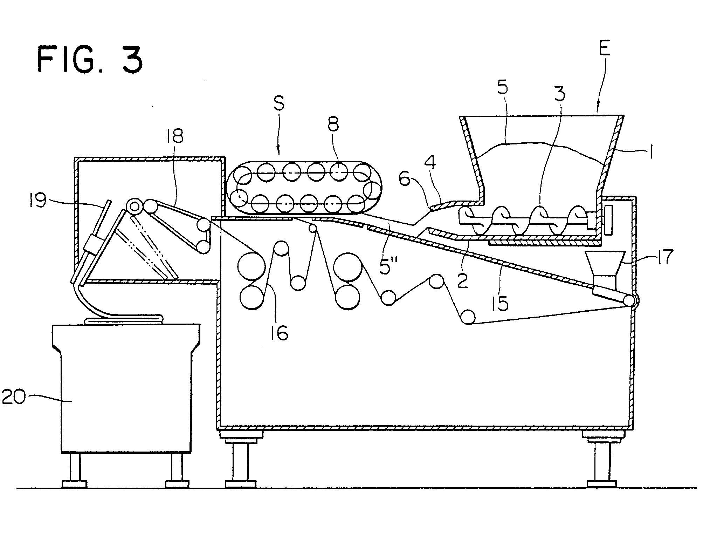

Referring now to Figures 2 and 3, which illustrate an embodiment of the present invention, a hopper 1 is mounted on a cylinder 2 so that dough material 5, prepared generally in the same manner as mentioned above with respect to the prior art, can be fed into the hopper 1 and thence delivered into the cylinder 2. Two screws 3 are arranged side by side in the cylinder 2 and are arranged to be rotated about their respective axes by drive means (not shown) provided outside of the cylinder. The cylinder 2 is provided at its forward end with a nozzle 4 having an elongate outlet 6 for discharging the dough material therefrom in the form of a continuous strip 5''. All of the parts so far described make up a screw-type extruder designated as E.

A first belt conveyor 15 is positioned for the upper flight thereof to receive the dough strip 5'' discharged from the extruder E. The upper flight of the conveyer 15 extends under the extruder E and is arranged to receive flour from a flour feeder 17 to preventing adhesion of the dough strip 5'' to the conveyor.

A second belt conveyor 16 is positioned downstream of the first conveyor 15 so that the upper flights of the conveyors 15 and 16 are arranged in series but with a gap therebetween. The speed of movement of the second conveyor 16 is greater than that of the first conveyor 15.

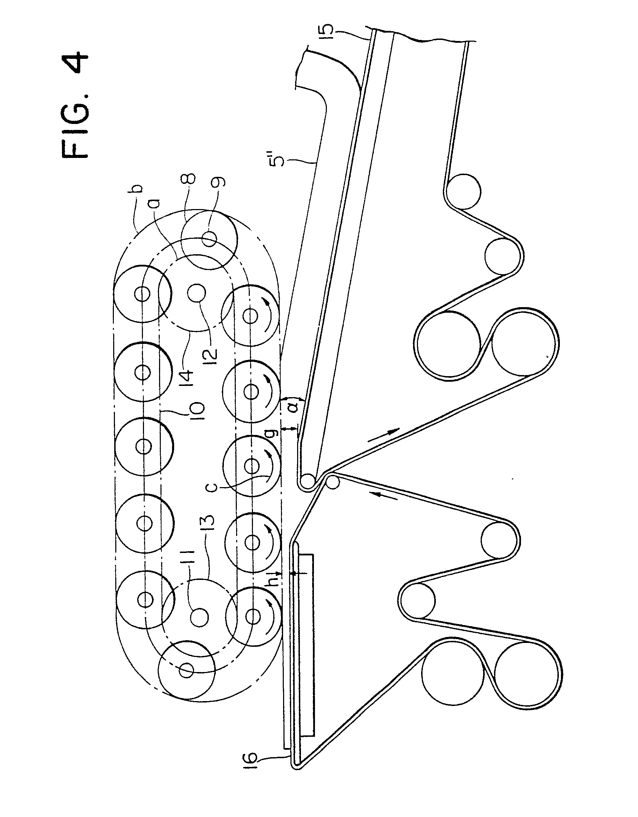

A dough-strip stretching device S is shown on a larger scale in Figure 4. It comprises a plurality of rollers 8 supported on respective shafts 9 so as to be freely rotatable thereabout. The shafts 9 are connected to chains 10 by suitable means, which chains are constrained to move along an endless path a by sprocket wheels 13 and 14. Therefore, when the sprocket wheels rotate, the rollers 8 move along an endless path similar to the path a to generate an outer envelope curve b, thereby applying a rolling pressure to the dough strip 5'' when the rollers move along a lower straight portion of the curve b.

The upper flight of the first belt conveyor 15 is disposed to approach the lower straight portion of the curve b at an angle a, but the uppermost portion of the converyor 15 is spaced from said lower straight portion by a distance g. The upper flight of the second belt conveyor 16 is parallel to the said lower straight portion of the curve b and is spaced therefrom by a distance h which is smaller than the distance g.

A further belt conveyor 18 is disposed downstream of the belt conveyor 16, the upper flights of these conveyors having opposed ends adjacent to each other whereby the conveyor 18 can receive a dough sheet which has been stretched by the stretching device S and is thereafter discharged from the second belt conveyor 16. The dough sheet carried along the conveyor 18 is then delivered to a rocking plate 19. A conveyor belt 21 running on a base 20 is positioned under the rocking plate 19 and extends at right angles with respect to the direction of movement of the stretched dough sheet. The dough sheet is folded on the conveyor belt 21 by the swinging motion of the rocking plate 19 as shown in Figures 2 and 3. The number of folds can be selected by adjusting the speeds of the conveyor belt 21 and the rocking plate 19.

The conveyor belt 21 may alternatively be disposed to extend in the same direction as the direction of movement of the stretched dough sheet. Furthermore any other means may be employed for carrying out the folding of the dough sheet.

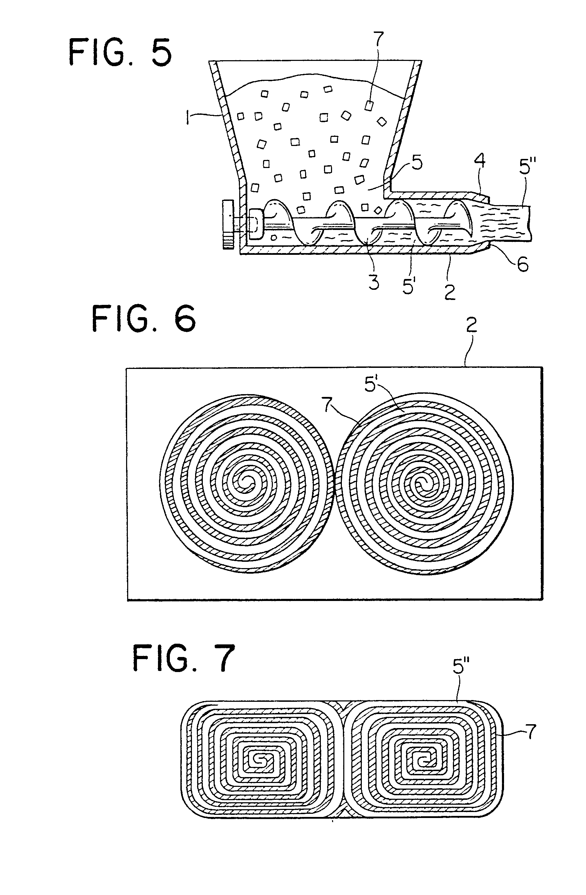

In operation, the dough material 5 prepared in the manner already mentioned is fed into the hopper 1 and thence into the cylinder 2, and is extruded from the extruder E through the outlet 6 of the nozzle 4 by the rotation of the screws 3, while itself being rotated. During this operation there occurs some difference between the rate of rotation of the dough material 5' (Figure 5) and that of the pieces of fat 7 in the cylinder 2, and furthermore the dough material 5' in the cylinder 2 is subjected to a greater shearing force in the circumferential direction as it approaches the inside wall of the nozzle 4. This shearing force increases still further at the region of the nozzle 4 adjacent to the narrow outlet 6, with the result that the pieces of fat 7 are distributed in the dough material 5' along a number of concentric or spiral layers, as diagrammatically shown in Figure 6. When the dough material 5' is discharged from the nozzle 4 through the narrow outlet 6 to form a dough strip 5'', the strip 5'' has a cross-section as diagrammatically shown in Figure 7.

The dough strip 5'' discharged from the extruder E is received on the upper flight of the first belt conveyor 15 and carried into the dough stretching device S to be subjected to a stretching operation. The dough strip 5'' is stretched by a tensile force due to the different speeds of the belt conveyors 15 and 16 and the rolling pressure of the rollers 8 as they move along their closed path. Thus, the multiple layers of fat in the dough strip 5'' are stretched in the same direction as that of the moving dough strip 5'', whereby a multi-layered dough material is produced.

For instance, the ratio of the components of flour dough, fat and salt water constituting the dough material 5 can be variously altered as desired. However, the dough material 5 should be of a relatively loose nature or of comparatively low viscosity, as otherwise the dough material in the hopper 1 would tend to adhere to the wall of the hopper, or the screws 3 would tend to kick back the dough material. It would then become necessary to have an operator attend the extruder E, and to manually press the dough material to cause it to move into the screws so that the latter continuously receive the material.

Also, although the extruder E has been described as having two screws 3, only a single screw or more than two screws may be used if desired.

By the term "die-sized" as used above to described the pieces of fat we mean substantially the same size as a die using in playing games of chance. By the term "plastic" as also used to describe the fat we mean that the fat retains its shape at room temperature but is spreadable when passed through a screw.

## Claims

1. A method of continuously making a dough strip having many layers, with flour dough layers (5') alternating with layers of fat (7), including the step of passing the flour dough through a screw-type extruder (E) comprising a cylindrical housing (2) with a screw (3) housed therein, characterised in that the flour dough which is passed through the said screw-type extruder has many pieces of fat (7) already dispersed therein, whereby a substantially concentrically or spirally layered dough strip (5'') is produced.

2. A method according to claim 1, wherein the said cylindrical housing (2) of the screw-type extruder contains more than one screw (3).

3. A method according to claim 1 or 2, wherein said cylindrical housing is provided at its downstream end with a reduced nozzle (4).

## Patentansprüche

1. Verfahren zur kontinuierlichen Herstellung eines vielschichtigen Teigstreifens, wobei Mehlteigschichten (5') sich mit Schichten aus Fett (7) abwechseln, inklusive des Schritts des Durchführens des Mehlteigs durch einen Schneckenextruder (E) umfassend ein zylindrisches Gehäuse (2) mit einer darin untergebrachten Schnecke (3), dadurch gekennzeichnet, daß der Mehlteig, der durch den Schneckenextruder durchgeleitet wird, darin bereits viele Stücke von Fett (7) verteilt hat, wodurch ein im wesentlichen konzentrisch oder spiralig geschichteter Teigstreifen (5'') erzeugt wird.

2. Verfahren nach Anspruch 1, worin das zylindrische Gehäuse (2) des Schneckenextruders mehr als eine Schnecke (3) enthält.

3. Verfahren nach Anspruch 1 oder 2, worin das zylindrische Gehäuse an seinem flußabwärts gelegenen Ende mit einer reduzierten Düse (4) versehen ist.

## Revendications

1. Procédé de production en continu d'une bande de pâte comportant de nombreuses couches, des couches (5') de pâte de farine alternant avev des couches de matière grasse (7), comprenant l'étape qui consiste à faire passer la pâte de farine dans un extrudeuse (E) du type à vis comprenant un corps cylindrique (2) dans lequel est logée une vis (3), caractérisé en ce que la pâte de farine que l'on fait passer dans ladite extrudeuse du type à vis comporte un grand nombre de morceaux de matière grasse (7) déjà en dispersion dans cette pâte, de manière à produire une bande (5'') de pâte en couches sensiblement concentriques ou en spirale.

2. Procédé selon la revendication 1, dans lequel ledit corps cylindrique (2) de l'extrudeuse du type à vis contient plus d'une vis (3).

3. Procédé selon la revendication 1 ou 2, dans lequel ledit corps cylindrique comporte à son extrémité aval une buse réduire (4).

# FIG. 1

# FIG. 2

# FIG. 3

FIG. 4

# FIG. 5

# FIG. 6

# FIG. 7